(19) **Europäisches Patentamt / European Patent Office / Office européen des brevets**

(11) **EP 4 324 721 A1**

(12) **EUROPEAN PATENT APPLICATION**
published in accordance with Art. 153(4) EPC

(43) Date of publication:
**21.02.2024 Bulletin 2024/08**

(21) Application number: **22787859.2**

(22) Date of filing: **22.02.2022**

(51) International Patent Classification (IPC):
**B61L 27/00** $^{(2022.01)}$  **G06Q 50/10** $^{(2012.01)}$
**G06Q 50/30** $^{(2012.01)}$

(52) Cooperative Patent Classification (CPC):
**G06Q 30/0202; B61L 27/00; G06Q 50/10; G06Q 50/40**

(86) International application number:
**PCT/JP2022/007221**

(87) International publication number:
**WO 2022/219931 (20.10.2022 Gazette 2022/42)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **12.04.2021 JP 2021067091**

(71) Applicant: **Hitachi, Ltd.**
**Tokyo 100-8280 (JP)**

(72) Inventors:
• **KAZAWA Yui**
  **Tokyo 100-8280 (JP)**
• **KOBAYASHI Yuichi**
  **Tokyo 100-8280 (JP)**
• **NAKAGAWA Kaori**
  **Tokyo 100-8280 (JP)**

(74) Representative: **MERH-IP Matias Erny Reichl Hoffmann**
**Patentanwälte PartG mbB**
**Paul-Heyse-Strasse 29**
**80336 München (DE)**

(54) **TIMETABLE CHANGE SUPPORT SYSTEM, TRAFFIC SYSTEM, AND TIMETABLE CHANGE SUPPORT METHOD**

(57) It is determined whether it is necessary to change departure time of a connection destination vehicle at a connection station based on transfer failure location information and a searching result of an alternative route searching unit.

[FIG. 4]

EP 4 324 721 A1

**Description**

Technical Field

The present invention relates to a timetable change support system, a transportation system, and a timetable change support method.

Background Art

Public transportation, represented by railway transportation services, changes a timetable for daily operation plans in response to changes in conditions such as operation disorder and fluctuations in passenger demands. For example, when a vehicle arrives late and connection to another vehicle cannot be secured, the departure time of a connected vehicle may be adjusted in order to secure connection between a connecting vehicle and the connected vehicle. Determining whether a timetable change is necessary is an advanced task that requires securing rationality, and requires a considerable amount of labor and time.

JP2011-255766A (PTL 1) discloses a technique for making it possible to smoothly adjust vehicle operation timetables between routes and companies when connecting to other routes. According to PTL 1, first, operation information on each of first and second vehicles is obtained from each of a first operation management system that manages the first vehicle and a second operation management system that manages the second vehicle, and predicted arrival time of each vehicle at each station is calculated from the operation information on each vehicle. It is determined whether it is necessary to change the departure time of a connected vehicle based on a calculation result of the predicted arrival time of each vehicle at each station and actual result data regarding the past transfer.

Citation List

Patent Literature

PTL 1: JP2011-255766A

Summary of Invention

Technical Problem

According to the technique disclosed in PTL 1, it is possible to determine whether a transfer time at a connection station is secured and rationally determine whether a timetable needs to be changed based on the number of transfer passengers.

However, in PTL 1, a passenger's destination station is not taken into consideration. For example, a passenger may be able to reach a destination station through a course different from a course that is originally intended by the passenger. An unnecessary timetable change leads to an increase in costs for a transportation company, and a decrease in passengers, satisfaction. For this reason, it is desirable not to change a timetable in a case where passenger convenience will not be greatly impaired even when connections are not secured.

In order to meet passengers' movement demands and perform necessary minimum timetable changes, it is necessary to acquire information on a course originally intended by a passenger who transfers between vehicles and to determine whether a timetable needs to be changed based on the number of transfer passengers for which there is no another course through which a destination station can be reached.

An object of the invention is to meet passengers' movement demands and perform necessary minimum timetable changes in a timetable change support system.

Solution to Problem

A timetable change support system according to an aspect of the invention is a timetable change support system including a processing unit and a storage unit, in which the storage unit stores operation plan information, vehicle position information, and movement demand prediction information including a departure station of a passenger using each station where the vehicle stops, arrival time at the departure station, a destination station, and a first route from the departure station to the destination station, the processing unit includes a timetable change necessity determination unit that performs timetable change necessity determination, and the timetable change necessity determination unit includes an operation state prediction unit that estimates predicted arrival time of each vehicle at each station based on the vehicle position information and generates predicted timetable information, a transfer failure location estimation unit that estimates a transfer failure location defined by a station where connection is not able to be secured due to a delay of arrival of the vehicle, a connection source vehicle, and a connection destination vehicle, based on the predicted timetable information and transfer information including two vehicles between which the passenger is assumed to transfer and a connection station, an alternative route searching unit that searches for a second route through which the passenger transfers to a vehicle, which is different from a vehicle to which the passenger is assumed to transfer when using the first route at the station where connection is not able to be secured, and heads for the destination station, based on route network information representing connection between stations and the predicted timetable information, and an evaluation unit that determines whether it is necessary to change the departure time of the connection destination vehicle at the connection station, based on the transfer failure location information and a searching result of the alternative route searching unit.

Advantageous Effects of Invention

According to an aspect of the invention, it is possible to meet passengers' movement demands and perform necessary minimum timetable changes in a timetable change support system.

Brief Description of Drawings

[Fig. 1] Fig. 1 is a diagram illustrating an example of a configuration of transportation facilities.
[Fig. 2] Fig. 2 is a diagram illustrating an example of a configuration of a transportation system 10.
[Fig. 3] Fig. 3 is a diagram illustrating a schematic hardware configuration of a timetable change support system in Fig. 2.
[Fig. 4] Fig. 4 is a functional block diagram of a timetable change support system in Example 1.
[Fig. 5] Fig. 5 is a diagram illustrating an example of predicted timetable information.
[Fig. 6] Fig. 6 is a diagram illustrating an example of transfer information.
[Fig. 7] Fig. 7 is a diagram illustrating an example of transfer failure location information.
[Fig. 8] Fig. 8 is a diagram illustrating an example of movement demand prediction information.
[Fig. 9] Fig. 9 is a diagram illustrating an example of departure time proposal information.
[Fig. 10] Fig. 10 is a flowchart illustrating timetable change necessity determination processing performed by a timetable change necessity determination unit in Fig. 4.
[Fig. 11] Fig. 11 is a diagram illustrating an example in which results of timetable change necessity determination are displayed on an output unit.
[Fig. 12] Fig. 12 is a flowchart illustrating details of evaluation value calculation processing in the timetable change necessity determination processing illustrated in Fig. 10.
[Fig. 13] Fig. 13 is a flowchart illustrating details of alternative route searching processing in the evaluation value calculation processing illustrated in Fig. 12.
[Fig. 14] Fig. 14 is a functional block diagram of a timetable change support system in Example 2.
[Fig. 15] Fig. 15 is a diagram illustrating an example of passenger point information.
[Fig. 16] Fig. 16 is a flowchart illustrating timetable change necessity determination processing performed by a timetable change necessity determination unit in Fig. 14.
[Fig. 17] Fig. 17 is a flowchart illustrating details of passenger point information update processing in the timetable change necessity determination processing illustrated in Fig. 16.

Description of Embodiments

Hereinafter, examples of a timetable change support system according to the invention will be described with reference to the drawings.

[Example 1]

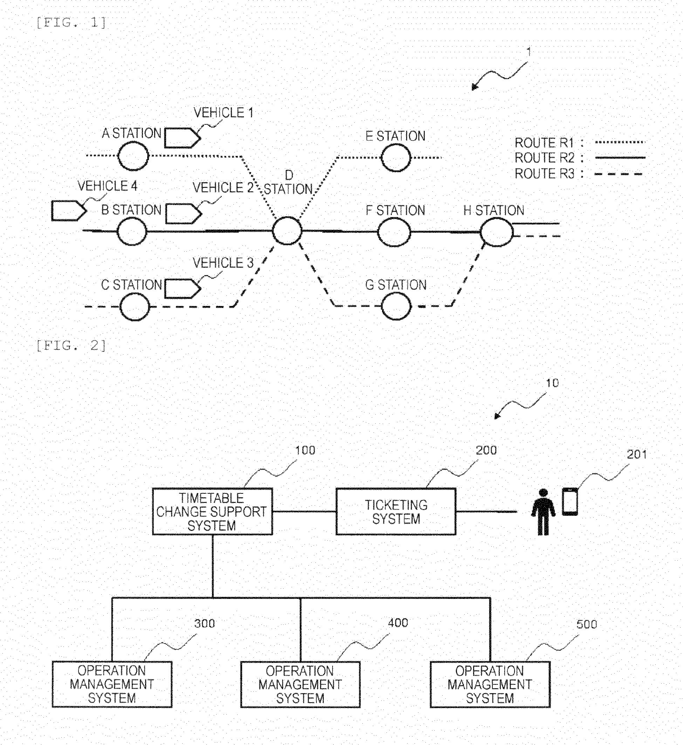

An example of a configuration of a transportation facility will be described with reference to Fig. 1.
A transportation facility 1 includes a plurality of stations A to H and vehicles 1 to 4 that stop at the stations A to H. Note that, in this specification, the term "station" refers to a point where passengers can get on and off. The vehicles 1 to 4 are vehicles by which a plurality of users move together, and their operation plans and operation states are managed by an operation management system (Fig. 2), which will be described later.
Examples of the vehicles 1 to 4 include trains, buses, ships, aircraft, and the like. Here, it is assumed that operation plans and operation states of the vehicles 1 to 4 are managed by different operation management systems, but the operation plans and operation states may be managed by the same operation management system. The vehicle 1 is a vehicle that travels on a route R1 and travels in the order of the A station, the D station, and the E station. The vehicles 2 and 4 are vehicles that run on a route R2 and run in the order of the B station, the D station, the F station, and the H station. The vehicle 3 is a vehicle that travels on a route R3 and travels in the order of the C station, the D station, the G station, and the H station.

The D station is a station on the routes R1, R2, and R3, and a passenger in a vehicle traveling on the route R2 can transfer to a vehicle traveling on the route R2 or the route R3 at the D station. In addition, a passenger in a vehicle traveling on the route R2 can transfer to a vehicle traveling on the route R1 or the route R3 at the D station. In addition, a passenger in a vehicle traveling on the route R3 can transfer to a vehicle traveling on the route R1 or the route R2 at the D station. Note that, in this specification, a station, such as the D station, which is used when transferring from a vehicle traveling on a certain route to a vehicle traveling on another route is referred to as a connection station. The connection station may be a different station installed in a different building, or a station with a different platform installed in the same premises.

Example 1 shows a case where the vehicles 1 to 4 stop at the D station, a case where the arrival time of the vehicle 1 at the D station and the departure time of the vehicle 2 from the D station in an operation plan are set such that transfer from the vehicle 1 to the vehicle 2 is possible, and a case where connection from the vehicle 1 to the vehicle 2 cannot be secured due to a delay of the vehicle 1, and it is determined whether it is necessary to change the departure time of the vehicle 2 from the D station, based on the number of transfer passengers who cannot reach destination stations through courses different from their originally intended courses among passengers who transfer from the vehicle 1 to the vehicle 2.

Fig. 2 is a diagram illustrating an example of a configuration of a transportation system 10.

A transportation system 20 includes a timetable change support system 100, a ticketing system 200, an operation management system 300, an operation management system 400, and an operation management system 500. The timetable change support system 100, the ticketing system 200, the operation management system 300, the operation management system 400, and the operation management system 500 are connected to each other by lines that are not illustrated in the drawing.

The timetable change support system 100 acquires vehicle operation plans and vehicle travel positions obtained from the operation management system 300, the operation management system 400, and the operation management system 500. In addition, the timetable change support system 100 acquires information on movement demands (for example, who is going to travel from where to where and when) from the ticketing system 200.

The operation management system 300 manages an operation plan and an operation state of the vehicle 1. In addition, the operation management system 400 manages operation plans and operation states of the vehicle 2 and the vehicle 4. In addition, the operation management system 500 manages an operation plan and an operation state of the vehicle 3. The management of the operation plan and the operation state of each vehicle using each operation management system may be performed using a known technique, and thus the description thereof is omitted here.

The ticketing system 200 is a system for a passenger using the transportation facility 1 to appropriately pay a fare for using the transportation facility 1. The ticketing system 200, which is, for example, a server computer, exchanges information with a portable terminal 201 and performs fare payment processing through a line which is not illustrated in the drawing. The portable terminal 201 is a portable computer operated by a passenger using the transportation facility 1, and is, for example, a mobile phone, a smart phone, a tablet computer, a notebook computer, or the like. Transmission and reception of various types of information between the portable terminal 201 and the ticketing system 200 and payment of fares by the ticketing system 200 may be performed using known techniques, and thus the description thereof is omitted here.

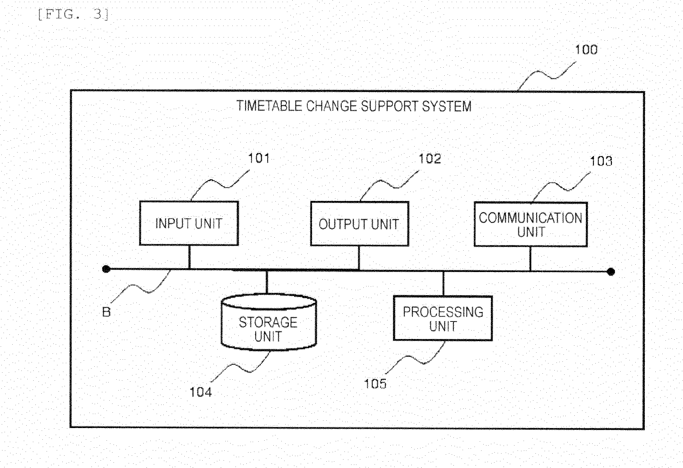

Fig. 3 is a diagram illustrating a schematic hardware configuration of the timetable change support system 100.

The timetable change support system 100 is, for example, a personal computer or a server computer. As illustrated in Fig. 3, the timetable change support system includes an input unit 101, an output unit 102, a communication unit 103, a storage unit 104, and a processing unit 105, which are connected to each other via a bus B.

The input unit 101 is constituted by, for example, a keyboard and a mouse and is an interface through which a user inputs operations related to the timetable change support system. The output unit 102 is constituted by, for example, a display device and is an interface for displaying information on the timetable change support system.

The communication unit 103 is connected to a communication line which is not illustrated in the drawing and is an interface for performing transmission and reception of various types of information between the ticketing system 200, the operation management systems 300, 400, and 500, and the timetable change system. In this manner, the communication unit 103 is composed of a transmission unit and a reception unit.

The storage unit 104 is constituted by, for example, a hard disk device, and stores programs and data related to the timetable change support system 100 in a non-volatile manner. The processing unit 105 includes, for example, a processor constituted by a central processing unit (CPU) and a random access memory (RAM) used as a work area of the processor. The processing unit 105 performs various information processing by causing the processor to execute various processing programs stored in the storage unit 104.

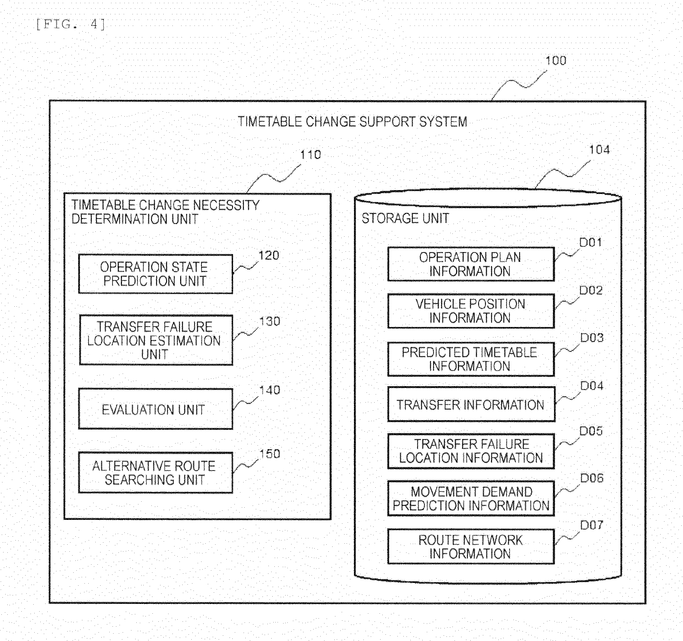

Fig. 4 is a functional block diagram of the timetable change support system 100 according to Example 1.

A timetable change necessity determination unit 110 has a function of estimating a vehicle for which connection cannot be secured due to a delay (hereinafter referred to as a connection source vehicle) and a connection station, and determining whether the departure time of a vehicle to which the delayed vehicle is to be connected (hereinafter referred to as a connection destination vehicle) is required to be changed.

In Example 1, the timetable change necessity determination unit 110 is implemented by executing various processing programs stored in the storage unit 104 by the above-described processing unit 105 (Fig. 3). As illustrated in Fig. 4, the timetable change necessity determination unit 110 includes an operation state prediction unit 120, a transfer failure location estimation unit 130, an evaluation unit 140, and an alternative route searching unit 150.

The operation state prediction unit 120 generates predicted timetable information D2 which is a prediction result of the future operation state of each vehicle by using operation plan information D1 and vehicle position information D2 acquired from the operation systems 300, 400 and 500 through the communication unit 103 described above. The operation plan information D1 is an operation plan applied to each vehicle on each route, and is transmitted in advance from the operation system to the timetable change support system and stored in the storage unit 104. The vehicle position information D2 is information indicating the travel position of each vehicle of which the operation state is managed by the operation systems 300, 400, and 500, and it is assumed that the latest information is transmitted at predetermined time intervals (for example, every 5 minutes, or the like), and the vehicle position information D2 stored in the storage unit 104 is updated.

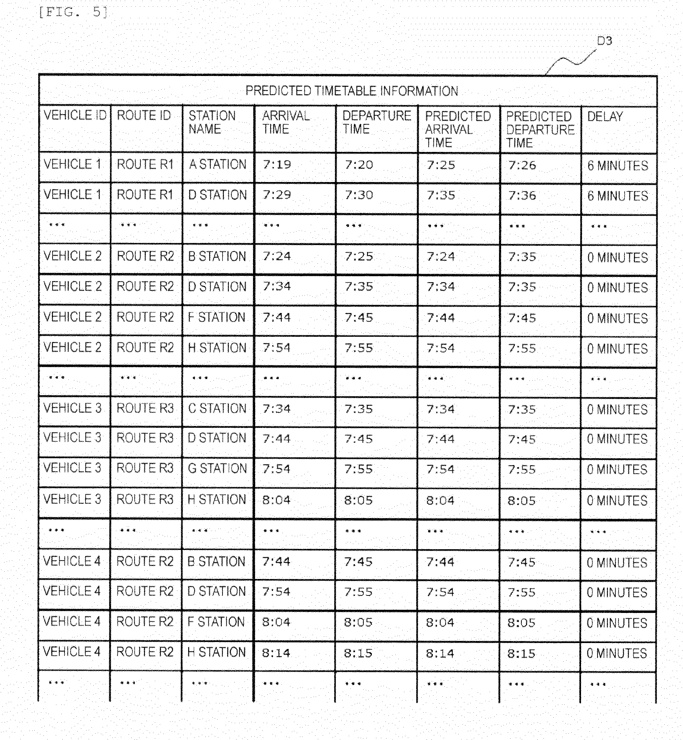

Fig. 5 is a diagram illustrating an example of the predicted timetable information D3.

The predicted timetable information D3 includes information for uniquely identifying a vehicle (for example, the vehicle 1, the vehicle 2, the vehicle 3, the vehicle 4, or the like), information for identifying a route on which a vehicle travels (for example, the route R1, the route R2, the route R3, or the like), information for identifying a station where a vehicle stops (for example, the A station, the B station, the C station, or the like), the arrival time and the departure time of each vehicle at each station based on the operation plan information D1, the predicted arrival time and departure time of each vehicle at each station which are predicted based on the vehicle position information D2, and the delay time of the arrival time of each vehicle at each station.

The transfer failure location estimation unit 130 generates transfer failure location information D5 which is estimation results of a connection source vehicle for which connection between vehicles cannot be secured, a connection destination vehicle, and a connection station by using the predicted timetable information D3 and transfer information D4 which is information on transfer between vehicles.

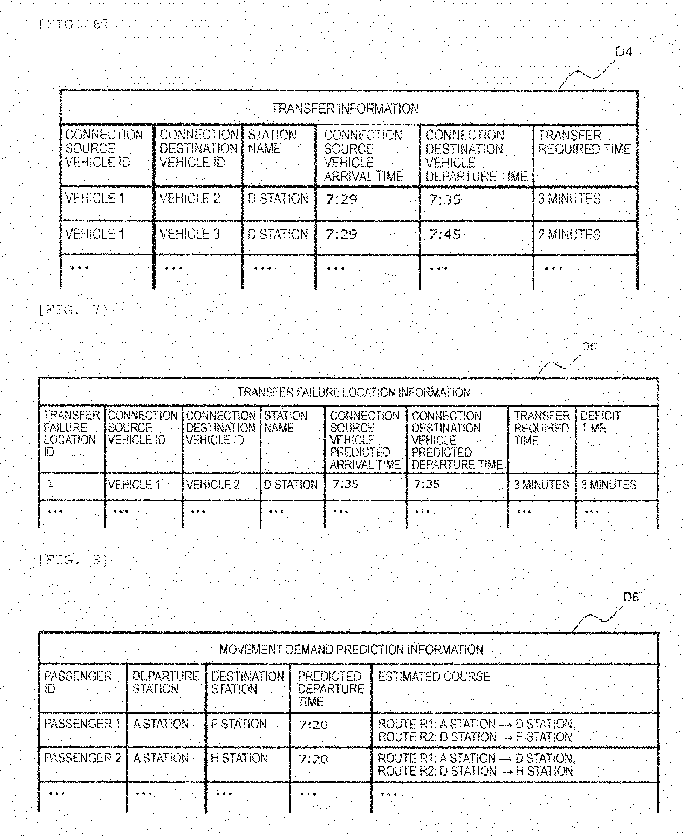

Fig. 6 is a diagram illustrating an example of the transfer information D4.

The transfer information D4 includes, for two vehicles between which a passenger is assumed to transfer and a connection station, information for identifying a connection source vehicle, information for identifying a connection destination vehicle, and information for identifying a connection station, the arrival time of the connection source vehicle at a connection station, the departure time of the connection destination vehicle at a connection station, and a period of time required for passengers' transfer. The two vehicles between which transfer is assumed may be defined based on operation plans of respective routes, or may be defined based on actual result data regarding passengers' transfer. In addition, the period of time required for passengers' transfer may be defined as an arbitrary value, or may be defined based on actual result data regarding passengers' transfer.

Fig. 7 is a diagram illustrating an example of the transfer failure location information D5.

The transfer failure location information D5 includes, for each transfer failure location, information for uniquely identifying transfer failure locations (for example, an ID for managing a transfer failure location, and the like), information for identifying a connection source vehicle, information for identifying a connection destination vehicle, information for identifying a connection station where transfer is performed, predicted arrival time of the connection source vehicle at a connection station, and predicted departure time of the connection destination vehicle at the connection station, and a deficit time which is a deficit in the amount of time that to secure connection between vehicles. Here, the deficit time is obtained by taking an absolute value of a value obtained by subtracting a period of time required for passengers, transfer from a difference between the predicted departure time of the connection destination vehicle at the connection station and the predicted arrival time of the connection source vehicle at the connection station.

Fig. 8 is a diagram illustrating an example of movement demand prediction information D6.

The movement demand prediction information D6 includes information for uniquely identifying passengers (for example, a user ID used when a ticketing system is used, and the like), a departure station of a passenger, and predicted departure time which is the time when a passenger is estimated to start traveling, a destination station of a passenger, and a course which is estimated to be used by a passenger. The course estimated to be used by a passenger is only required to be obtained using a known algorithm, and thus the description thereof will be omitted here.

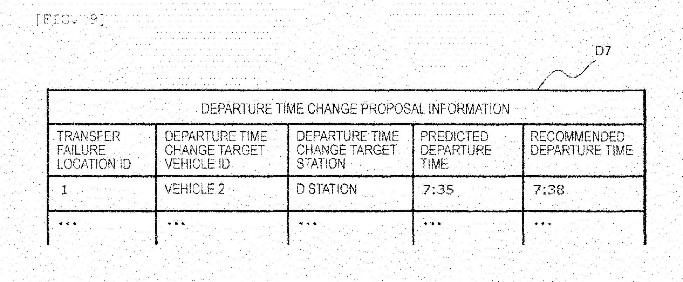

Fig. 9 is a diagram illustrating an example of departure time proposal information D7.

The departure time change proposal information D7 includes, for a transfer failure location for which it is determined that the departure time of a connection destination vehicle needs to be changed, information for uniquely identifying the transfer failure location, information for uniquely identifying a connection destination vehicle for which it is determined that departure time needs to be changed, information for uniquely identifying a connection station, predicted arrival time of the above-described connection destination vehicle at a connection station which is obtained with reference to the predicted timetable information D3, and recommended departure time to be described later.

The evaluation unit 140 determines whether it is necessary to change the departure time of a connection destination vehicle for each transfer failure location, and updates the departure time change proposal information D7 when the departure time needs to be changed. Further, the timetable change necessity determination unit 110 transmits the departure time change proposal information D7 to the operation management system that manages an operation plan and an operation state of the connection destination vehicle through the communication unit 103. Further, the timetable change necessity determination unit 110 displays the departure time change proposal information D7 on the output unit 102.

In a case where connection between vehicles cannot be secured due to a delay of a connection source vehicle, the alternative route searching unit 150 searches for a course which is different from a course which is estimated to be used by a passenger set in the movement demand prediction information D6 and for which an increment in a necessary time required for movement is a predetermined value or less, by using the predicted timetable information D3, the transfer information D4, the movement demand prediction information D6 acquired from the ticketing system 200 through the communication unit 103 described above, and route network information D7 indicating a connection relationship between stations.

Hereinafter, processing of the timetable change support system 100 described above will be described in detail.

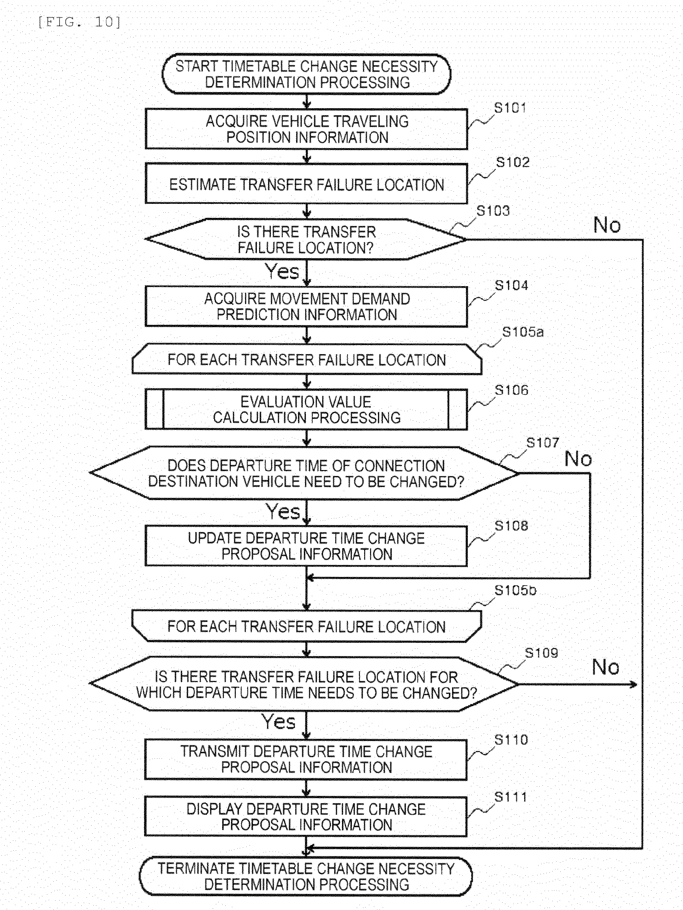

Fig. 10 is a flowchart illustrating processing of the timetable change necessity determination unit 110.

First, the timetable change necessity determination unit 110 receives traveling positions of the vehicles 1 to 3 at the present time from the operation management systems 300, 400, and 500 through the communication unit 103 (step S101) . Then, the predicted timetable information illustrated in Fig. 4 is created.

Next, the timetable change necessity determination unit 110 creates the transfer failure location information illustrated in Fig. 7 with reference to the predicted timetable information illustrated in Fig. 5 and the transfer information illustrated in Fig. 6 (step S102) .

For example, when the vehicle 1 and the vehicle 2 are operated according to the predicted timetable information D5 illustrated in Fig. 5, the vehicle 1 arrives at the D station at 7:35, and the vehicle 2 departs from the D station at 7:35. On the other hand, as illustrated in Fig. 6, it takes three minutes for transfer from the vehicle 1 to the vehicle 2. In this case, since connection from the vehicle 1 to the vehicle 2 cannot be secured, transfer from the vehicle 1 to the vehicle 2 at the D station is registered in the transfer failure location information as a transfer failure location, and a deficit time is represented as three minutes. This means that a deficit in time to secure connection between the vehicle 1 and the vehicle 2 is three minutes.

When there is a transfer failure location (step S103 "Yes"), the timetable change necessity determination unit 110 receives the movement demand prediction information illustrated in Fig. 8 from the ticketing system 200 through the communication unit 103 (step S104).

Note that, when there is no transfer failure location (step S103 "No"), it is determined that a timetable change is not necessary, and the timetable change necessity determination processing is terminated. Next, the timetable change necessity determination unit 110 performs the following processing for each of the transfer failure locations listed in step S102 (step S105a). However, in this example, it is assumed that there is only one transfer failure location.

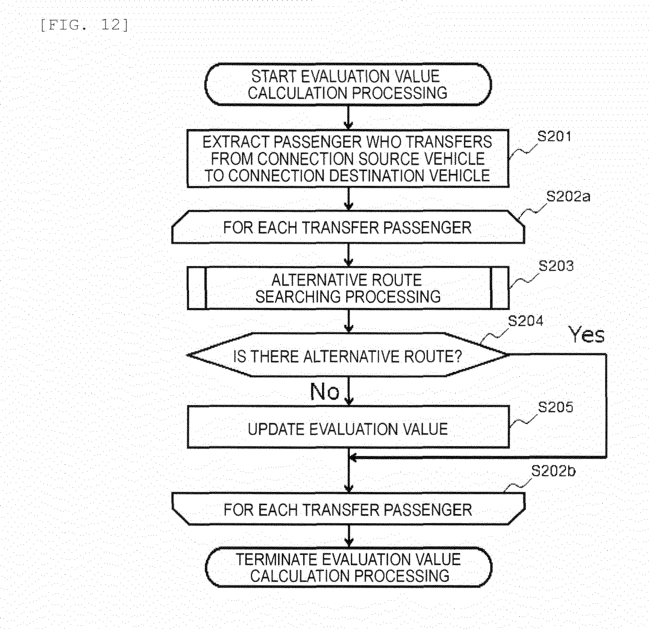

First, evaluation value calculation processing (step S106) is performed. Details of the evaluation value calculation processing will be described later (Fig. 12). Next, the timetable change necessity determination unit 110 determines whether it is necessary to change the departure time of a connection vehicle at the transfer failure location based on the calculated evaluation value (step S107) .

For example, when the evaluation value exceeds a predetermined value, it is determined that a timetable change is necessary. Alternatively, instead of performing the evaluation value calculation processing (step S106) and determining that a timetable change is necessary based on the evaluation value, it may be determined whether a timetable change is necessary by using a statistical model constructed using the past actual result data.

When it is necessary to change the departure time of a connection vehicle at the transfer failure location (step S107 "Yes"), the timetable change necessity determination unit 110 registers a connection source vehicle at the transfer failure location, predicted arrival time of the connection source vehicle at a connection station, a connection destination vehicle, and recommended departure time of the connection destination vehicle at the connection station in the departure time change proposal information illustrated in Fig. 9 (step S108).

Here, the recommended departure time of the connection destination vehicle is the departure time of the connection destination vehicle which enables transfer from the connection source vehicle to the connection destination vehicle. For example, when transfer from the vehicle 1 to the vehicle 2 at the D station described in the transfer failure location information illustrated in Fig. 7 can be performed, a difference between the departure time of the vehicle 2 which is a connection destination vehicle and the arrival time of the vehicle 1 which is a connection source vehicle is insufficient by three minutes, and thus, transfer from the vehicle 1 to the vehicle 2 can be performed by delaying the departure time of the vehicle 2 by three minutes or more.

In Example 1, 7:38 is set as the recommended departure time for the vehicle 2 by using a restriction that transfer from the connection source vehicle to the connection destination vehicle is possible and a restriction that a difference from an operation plan is the minimum. Note that an arbitrary restriction may be used as a restriction at the time of setting the recommended departure time of the connection destination vehicle.

The above-described processing from step S106 to step S108 is repeatedly performed for the transfer failure locations listed in step S102 (step S105b) .

After the processing from step S106 to step S108 has been completed for all of the transfer failure locations listed in step S102, when there is no transfer location where it is determined that the departure time of the connection destination vehicle from the connection station needs to be changed (step S109 "No"), the determination regarding whether a timetable change is necessary is terminated.

On the other hand, when there is a transfer failure location where it is determined that it is necessary to change the departure time of the connection destination vehicle at the connection station (step S109 "Yes"), the departure time change proposal information illustrated in Fig. 9 is transmitted to an operation management system that manages the operation state of a vehicle for which it is determined that the departure time needs to be changed through the communication unit 103 (step S110). Further, the departure time change proposal information is displayed on the output unit (step S111).

Note that, before the departure time change proposal information is transmitted, a user of the timetable change support system 100 may be inquired whether to transmit the departure time change proposal information to the operation management system that manages the operation plan and operation state of the connection destination vehicle. In addition, the operation management system having received the departure time change proposal information may include a reception unit that receives information regarding whether a timetable change has been performed.

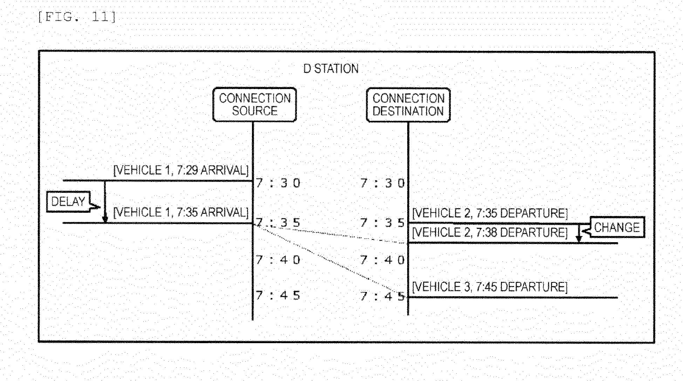

Fig. 11 illustrates another example in which results of determination regarding whether a timetable change needs to be performed are displayed on a screen.

In this example, predicted arrival time of a connection source vehicle at the D station and predicted departure time of a connection destination vehicle from the D station are visually shown. Further, parts that have changed from an operation plan are also shown. Here, the parts that have changed from the operation plan include changes in arrival time and departure time due to operation disorder such as a delay, and recommended departure time which is set by the timetable change necessity determination unit 110. In addition, a dotted line connecting a horizontal line representing the predicted arrival time of the connection source vehicle and a horizontal line representing the predicted departure time of the connection destination vehicle indicates that transfer from the connection source vehicle to the connection destination vehicle is possible.

With such a display method, the user can visually understand operation states of the connection source vehicle and the connection destination vehicle, results of necessity determination performed by the timetable change necessity determination unit 110, recommended departure time calculated by the timetable change necessity determination unit 110, and the like. The timetable change necessity determination unit 110 performs the above-described processing from step S101 to step S111 and then terminates the timetable change necessity determination processing.

Although the above-described series of processing is repeatedly executed at predetermined time intervals (for example, every five minutes, or the like) in periodic startup, the timetable change support system 100 may be configured to include a command input unit that receives an input of a user's command and execute the above-described series of processing at a timing when the user's command is input.

Fig. 12 is a flowchart illustrating processing of the timetable change necessity determination processing S106 illustrated in Fig. 10.

According to Example 1, in the timetable change necessity determination processing S106, the evaluation unit 140 calculates an evaluation value for determining whether it is necessary to change the departure time of a connection destination vehicle at a connection station.

First, the evaluation unit 140 extracts passengers who transfer from a connection source vehicle to a connection destination vehicle at the transfer failure location (hereinafter referred to as transfer passengers) with reference to the movement demand prediction information D7 received in step S104 (step S201). For example, in the movement demand prediction information illustrated in Fig. 8, passengers 1 and 2 are transfer passengers at the transfer failure location.

Next, the timetable change necessity determination unit 110 performs the following processing for each transfer passenger extracted in step S201 (step S202a).

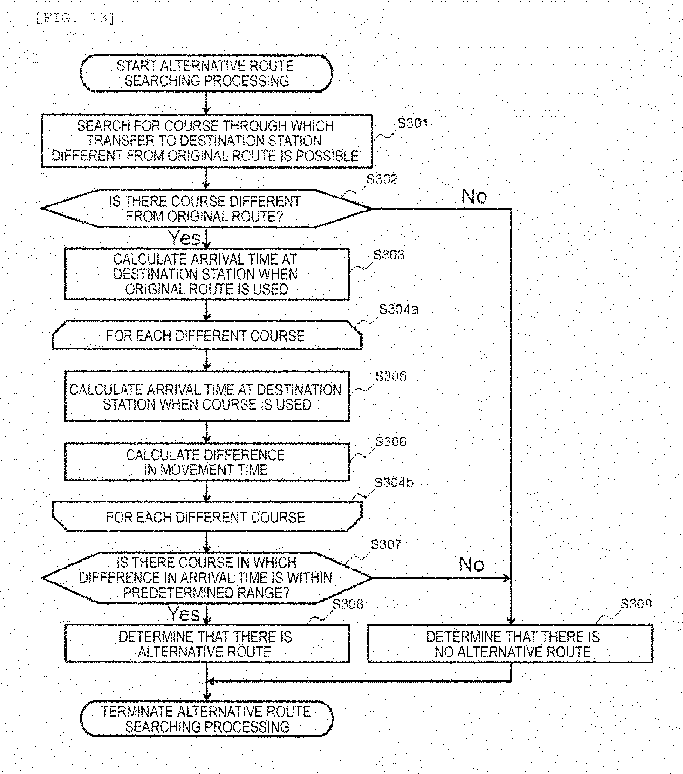

First, the evaluation unit 140 performs alternative route searching processing (step S203). Details of the alternative route searching processing will be described later (Fig. 13). when there is no alternative route (step S204 "No"), the evaluation unit 140 updates an evaluation value of the connection destination vehicle at the transfer failure location (step S205).

In Example 1, an evaluation value V is calculated, for example, by the following Formula (1).

[Formula 1]

$$V = \Sigma \text{ (increment of waiting time of transfer passenger } i \text{ for whom there is no alternative route)}$$

In Formula (1), the increment of the waiting time is a value obtained by subtracting a difference between the arrival time of the connection source vehicle and the departure time of the connection destination vehicle in a case where each vehicle operates according to the operation plan information D1 from a difference between the arrival time of the connection source vehicle and the departure time of the connection destination vehicle in a case where it is assumed that each vehicle operates according to the predicted timetable information D3 and a transfer passenger transfers to a vehicle which is a vehicle following the vehicle to which the transfer passenger was originally scheduled to transfer.

For example, when the vehicles 1 to 4 operate according to the operation plan, the passenger 1 illustrated in Fig. 8 is estimated to transfer from the vehicle 1 to the vehicle 2, and a waiting time is six minutes from the arrival time 7:29 of the vehicle 1 at the D station to the departure time 7:35 of the vehicle 2 from the D station. On the other hand, when the vehicles operate according to the predicted timetable information illustrated in Fig. 5, the passenger 1 is assumed to transfer to the vehicle 4 which is a vehicle following the vehicle 2, and a waiting time is 20 minutes from the arrival time 7:35 of the vehicle 1 at the D station to the departure time 7:55 of the vehicle 4 from the D station. Thus, an increment of the waiting time of the passenger 1 is calculated as 14 minutes.

Steps S203 to S205 described above are performed for each transfer passenger extracted in step S201 (S202b). The evaluation unit 140 performs the processing from step S201 to step S205 described above and then terminates the evaluation value calculation processing.

Fig. 13 is a flowchart illustrating the processing of the alternative route searching processing S203 illustrated in Fig. 12.

According to Example 1, in the evaluation value calculation processing S203, the alternative route searching unit 150 searches for a course which is different from a course estimated to be used by a passenger set in the movement demand prediction information D7 received in step S104 (hereinafter referred to as the original route ) and for which an increment in a necessary time required for movement is a predetermined value or less (hereinafter referred to as an alternative route).

First, the alternative route searching unit 150 lists a course for transferring to a vehicle different from the original route at the same connection station as the original route and then reaching a destination station or a station within a predetermined range from the destination station, and a course for transferring to a vehicle different from the original route at a connection station different from the original route and then reaching the destination station or a station within a predetermined range from the destination station, with reference to the destination station of the transfer passenger, the transfer information D4, and the route network information D7 (step S301).

Note that, in this specification, these routes are collectively referred to as a route different from the original route. For example, for the passenger 1 illustrated in Fig. 8, a course in which the passenger transfers from a vehicle traveling on the route 1 to a vehicle traveling on the route 2 and moves in the order of the A station, the D station, and the F station is set as the original route, and there is no course different from the original route. On the other hand, for the passenger 2 illustrated in Fig. 8, a course in which the passenger transfers from a vehicle traveling on the route 1 to a vehicle traveling on the route 2 and moves in the order of the A station, the D station, the F station, and the H station is set as the original route, and there is a course different from the original route in which the passenger transfers from the route 1 to the route 3 and moves in the order of the A station, the D station, the G station, and the H station.

When there is no route different from the original route (step S302 "No"), the alternative route searching unit determines that there is no alternate route for the transfer passenger (step S309), and terminates the alternate route searching processing. For example, it is determined that there is no alternative route for the passenger 1 described above.

On the other hand, when there is a route different from the original route (step S302 "Yes"), the arrival time at the destination station when the passenger uses the original route is calculated with reference to the predicted timetable information D3 (step S303). For example, when the passenger 2 described above uses the original route, it is estimated that the passenger 2 will transfer from the vehicle 1 to the vehicle 4 which is a vehicle following vehicle 2, and the arrival time at the H station is calculated as 8:14.

Next, the alternative route searching unit 150 performs the following processing for each course listed in step S301 (step S304a) .

First, the alternative route searching unit 150 calculates the arrival time at the destination station of the course or a station within a predetermined range from the destination station with reference to the predicted timetable information D3 and the transfer information D4 (step S305). For example, when the passenger 2 mentioned above uses a course different from the original route, it is estimated that the passenger 2 will transfer from the vehicle 1 to the vehicle 3, and the arrival time at the H station is calculated as 8:04.

Next, the arrival time at the destination station when using the original route calculated in step S302 and the arrival time at the destination station or the station within the predetermined range from the destination station when using the course calculated in step S305 are compared with each other (step S306) .

Steps S305 and S306 described above are performed for each course searched for in step S301 (step S304b) .

When there is a course for which an increment from the arrival time at the destination station when using the original route is within a predetermined range among the courses searched in step S301 and different from the original route (step S307 "Yes"), the alternative route searching unit determines that there is an alternative route for the transfer passenger (step S308), and terminates the alternative route searching processing. For example, when the passenger 2 mentioned above uses a course different from the original route, the arrival time at the H station is 10 minutes earlier than when the original route is used. That is, an increment is 0 minutes. Thus, it is determined that a course in which the passenger transfers from the vehicle 1 to the vehicle 3 and moves in the order of the A station, the D station, the G station, and the H station is an alternative route.

On the other hand, when there is no course for which an increment from the arrival time at the destination station when using the original route is within the predetermined range (step S307 "No"), the alternative route searching unit determines that there is no alternative route for the transfer passenger (step S309), and terminates the alternative route searching processing.

As described above, the timetable change support system 100 in Example 1 predicts the arrival time of each vehicle at each station, estimates a transfer failure location, searches for an alternative route of each transfer passenger who transfers from a connection source vehicle to a connection destination vehicle for each transfer failure location, and performs timetable change necessity determination based on an alternative route searching result. By performing the timetable change necessity determination in this manner, it is possible to meet passengers' movement demands and perform necessary minimum timetable changes.

[Example 2]

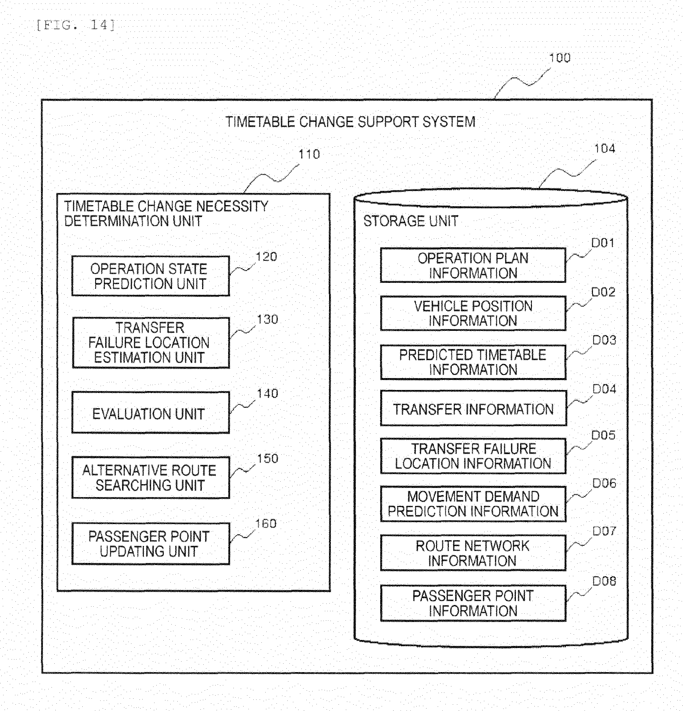

A timetable change support system 100 according to Example 2 will be described with reference to Fig. 14.

Example 2 is a modification example of Example 1 described above, and the timetable change support system 100 additionally stores passenger point information D8 in a storage unit 104. In addition, a timetable change necessity determination unit 110 additionally includes a passenger point updating unit 160. Since the other configurations are the same as those of the timetable change support system 100 in Example 1, the description thereof will be omitted.

Example 2 shows a case where vehicles 1 to 4 stop at a D station, a case where the arrival time of the vehicle 1 at the D station and the departure time of the vehicle 2 from the D station in an operation plan are set such that transfer from the vehicle 1 to the vehicle 2 is possible, and a case where connection from the vehicle 1 to the vehicle 2 cannot be secured due to a delay of the vehicle 1, and it is determined whether it is necessary to change the departure time of a connection destination vehicle, based on the number of transfer passengers who cannot reach destination stations through courses different from their originally intended courses and the total of points given to passengers in accordance with disadvantages incurred as a result of the timetable change necessity determination.

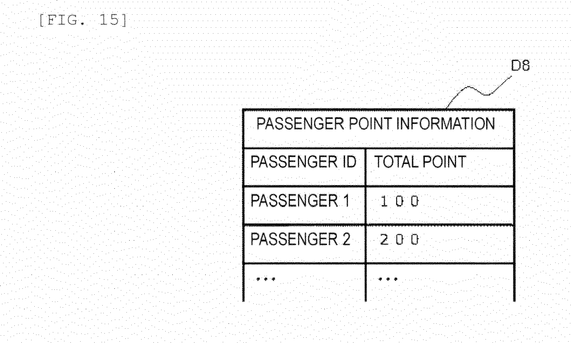

Fig. 15 is a diagram illustrating an example of the passenger point information D8.

The passenger point information D8 is information that stores the total of points given to passengers in accordance with disadvantages incurred as a result of the timetable change necessity determination in a transportation facility 1, and includes information for uniquely identifying passengers (for example, a user ID for using a ticketing system, and the like) and the total of points given to passengers.

The passenger point updating unit 160 extracts passengers who suffer disadvantages as a result of the timetable change necessity determination when performing the timetable change necessity determination, calculates points according to the degree of disadvantage suffered by each passenger, and gives the points to each passenger. That is, the calculated points are added to the total of points associated with the information for uniquely identifying passengers with reference to the passenger point information D8.

Hereinafter, processing of the timetable change support system 100 according to Example 2 will be described in detail.

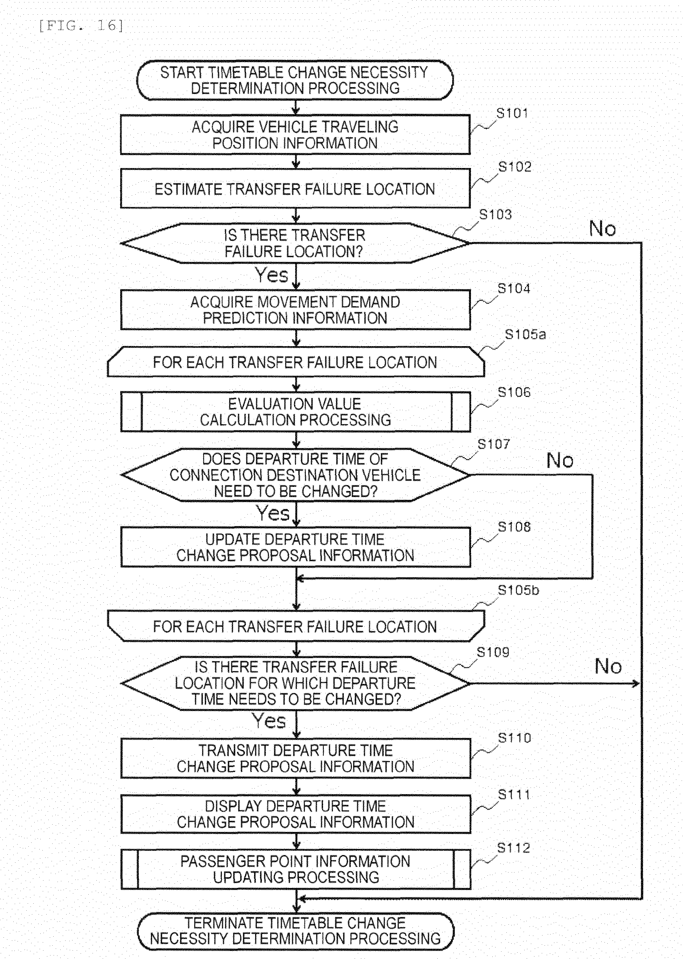

Fig. 16 is a flowchart illustrating the processing of the timetable change necessity determination unit 110.

The processing of the timetable change support system according to Example 2 differs from the processing of the timetable change support system according to Example 1 in that the evaluation value calculation method in step S106 is different and step S112 is added. Since the other steps are the same as those in Example 1, the description thereof is omitted.

According to Example 2, in the timetable change necessity determination processing S106, an evaluation unit 140 calculates an evaluation value for determining whether it is necessary to change the departure time of a connection destination vehicle at a connection station, based on passenger point information and whether there is an alternative route for a transfer passenger. An evaluation value V is calculated, for example, by the following Formula (2).

$$[\text{Formula 2}]$$

$$V = \Sigma \ (\text{increment of waiting time of transfer passenger } i \text{ for whom there is no alternative route} \times wi)$$

In Formula (2), wi is a value set based on the accumulated points given to passenger i obtained by referring to the passenger point information. For example, it is a value obtained by normalizing the cumulative total of points given to each passenger.

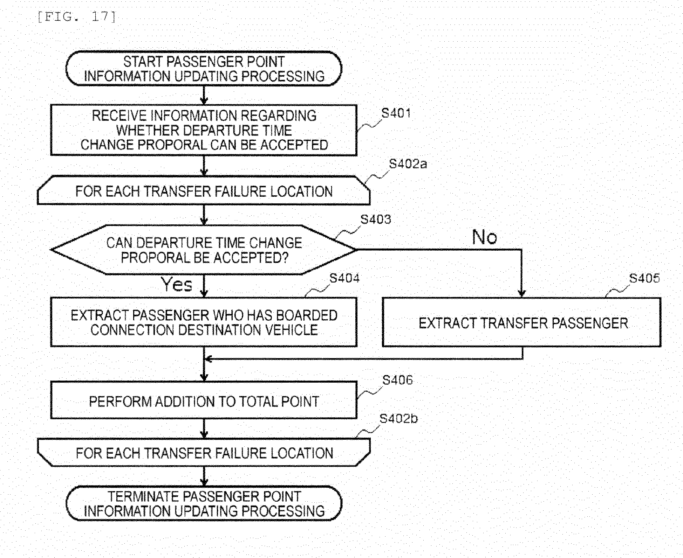

Fig. 17 is a flowchart illustrating processing of the timetable change necessity determination processing S112 illustrated in Fig. 16.

According to Example 2, in the timetable change necessity determination processing S112, the passenger point updating unit 160 receives information regarding whether a departure time change proposal can be accepted from an operation management system, and updates the passenger point information D8 in accordance with an acceptance possibility result.

First, the passenger point information updating unit 160 receives information indicating whether a departure time change proposal can be accepted from each operation management system that has transmitted departure time change proposal information D7 (step S401).

Next, the passenger point information updating unit 160 performs the following processing for each transfer failure location estimated in step S102 (step S402a). When a departure time change at the connection station of the connection destination vehicle at the transfer failure location can be accepted (step S403 "Yes"), a passenger who has boarded the connection destination vehicle at the connection station before the predicted departure time is extracted with reference to the movement demand prediction information D7 (step S404).

On the other hand, when the departure time change at the connection station of the connection destination vehicle at the transfer failure location cannot be accepted (step S403 "No"), a transfer passenger is extracted (step S405).

Next, the point information updating unit 160 sets points for each passenger extracted in step S404 or step S405 based on the acceptance possibility result of the departure time change proposal for the transfer failure location, and adds the points to the total of points in the passenger point information D8 (step S406).

Here, the point is a value given in accordance with a disadvantage suffered by a passenger as a result of timetable change necessity determination, and is set based on the amount of time that the departure time of the connection destination vehicle is delayed, for example, in the case of a passenger who has boarded the connection destination vehicle before the predicted departure time at the connection station. Further, for example, in the case of a transfer passenger, the point is set based on an increment of a waiting time associated with a fact that the departure time of the connection destination vehicle has not been changed.

Steps S403 to S406 described above are performed for each transfer failure location estimated in step S102 (S402b). The passenger point updating unit 160 performs the processing from step S401 to step S406 described above and the terminates the passenger point updating processing.

As described above, the timetable change support system 100 of this example predicts the arrival time of each vehicle at each station to estimate a transfer failure location, searches for an alternative route of each transfer passenger who transfers from a connection source vehicle to a connection destination vehicle for each transfer failure location, and performs timetable change necessity determination based on an alternative route searching result and the total of points of the passenger. By performing the timetable change necessity determination in this manner, it is possible to perform a reasonable timetable change while leveling inequality among passengers in the long term, in addition to being able to meet passengers' movement demands and perform necessary minimum timetable changes.

Although the invention has been described above using the examples, the technical scope of the invention is not limited to the scope described in the above examples, and various modifications are included. For example, the above-described examples have been described in detail in order to explain the invention in an easy-to-understand manner, and are not necessarily limited to those having all of the described configurations. In addition, addition of other configurations, deletion, and replacement can be made to some of the configurations of the examples.

In addition, the order of execution of processing such as operations, procedures, and steps in the functions, systems, and methods shown in the claims, the specification, and the drawings is not especially specified with the use of "before", "prior to", and the like, and the processing can be realized in an arbitrary order unless an output of the previous processing is used for the subsequent processing. Even when an operation flow in the claims, the specification, and the drawings is described with the use of "first", "next" for convenience, it does not mean that the operation flow is required to be in that order.

Reference Signs List

1:      transportation facility
10:     transportation system
100:    timetable change support system
101:    input unit
102:    output unit
103:    communication unit
104:    storage unit
105:    processing unit
110:    timetable change necessity determination unit
120:    operation state prediction unit
130:    transfer failure location estimation unit
140:    evaluation unit
150:    alternative route searching unit
160:    passenger point updating unit
200:    ticketing system
201:    portable terminal
300:    operation management system
400:    operation management system
500:    operation management system

**Claims**

1. A timetable change support system comprising:

   a processing unit; and
   a storage unit,
   wherein the storage unit stores operation plan information, vehicle position information, and movement demand prediction information including a departure station of a passenger using each station where the vehicle stops, arrival time at the departure station, a destination station, and a first route from the departure station to the destination station,
   the processing unit includes a timetable change necessity determination unit that performs timetable change necessity determination, and
   the timetable change necessity determination unit includes
   an operation state prediction unit that estimates predicted arrival time of each vehicle at each station based on the vehicle position information and generates predicted timetable information,
   a transfer failure location estimation unit that estimates a transfer failure location defined by a station where connection is not able to be secured due to a delay of arrival of the vehicle, a connection source vehicle, and a connection destination vehicle, based on the predicted timetable information and transfer information including two vehicles between which the passenger is assumed to transfer and a connection station,
   an alternative route searching unit that searches for a second route through which the passenger transfers to a vehicle, which is different from a vehicle to which the passenger is assumed to transfer when using the first route at the station where connection is not able to be secured, and heads for the destination station, based on route network information representing connection between stations and the predicted timetable information, and
   an evaluation unit that determines whether it is necessary to change the departure time of the connection destination vehicle at the connection station, based on the transfer failure location information and a searching result of the alternative route searching unit.

2. The timetable change support system according to claim 1, wherein the alternative route searching unit extracts the passengers who transfer between two vehicles for which connection is not able to be secured due to a delay of the connection source vehicle for each of the transfer failure locations, and searches whether there is the second route for each of the passengers.

3. The timetable change support system according to claim 2, wherein the evaluation unit calculates an evaluation value for the connection destination vehicle based on the number of passengers for whom there is no second route, and determines whether it is necessary to change the departure time of the connection destination vehicle based on the evaluation value.

4. The timetable change support system according to claim 1, wherein the processing unit creates information for uniquely identifying the connection destination vehicle, information for uniquely identifying the connection station, and departure time proposal information including recommended departure time of the connection destination vehicle, for each of the transfer failure locations for which the evaluation unit determines that it is necessary to change the departure time of the connection destination vehicle among the transfer failure locations.

5. The timetable change support system according to claim 4, further comprising:
an output unit that outputs the departure time proposal information.

6. The timetable change support system according to claim 1, wherein the storage unit further stores passenger point information including information for uniquely specifying the passengers who use the transportation facility, and a total of points given to the passengers in accordance with disadvantages incurred as a result of the timetable change necessity determination in the transportation facility,

the timetable change necessity determination unit further includes a point updating unit that extracts the passengers suffering disadvantages as a result of the timetable change necessity determination, calculates points according to the degree of disadvantage suffered by each passenger, and updates the passenger point information, and
the evaluation unit determines whether it is necessary to change the departure time of the connection destination vehicle at the connection station, based on the transfer failure location information, the searching result of the alternative route searching unit, and the passenger point information.

7. The timetable change support system according to claim 6, wherein the evaluation unit calculates the evaluation value for the connection destination vehicle based on the number of passengers for whom there is no second route and the passenger point information, and determines whether it is necessary to change the departure time of the connection destination vehicle based on the evaluation value.

8. The timetable change support system according to claim 6, wherein the point updating unit acquires identification information including information for uniquely identifying the transfer failure location and information for identifying whether a timetable change has been performed, and for each of the transfer failure locations, the point updating unit extracts passengers who have boarded the connection destination vehicle before the departure time of the connection destination vehicle at the connection station and gives points that are set based on the amount of time that the departure time of the connection destination vehicle has been changed when the timetable change has been performed, and the point updating unit extracts passengers who transfer from the connection source vehicle to the connection destination vehicle and gives points that are set based on a delay of arrival of the connection source vehicle and an increment of a movement time associated with a fact that the timetable change has not been performed, when the timetable change has not been performed.

9. A transportation system in which a timetable change support system, an operation management system, and a ticketing system are connected to each other through a line,

wherein the timetable change support system includes a processing unit including
a storage unit that stores operation plan information, vehicle position information, and movement demand prediction information including a departure station of a passenger using each station where the vehicle stops, arrival time at the departure station, a destination station, and a first route from the departure station to the destination station,
an operation state prediction unit that estimates predicted arrival time of each vehicle at each station based on the vehicle position information and generates predicted timetable information,
a transfer failure location estimation unit that estimates a transfer failure location defined by a station where connection is not able to be secured due to a delay of arrival of the vehicle, a connection source vehicle, and a connection destination vehicle, based on the predicted timetable information and transfer information including two vehicles between which the passenger is assumed to transfer and a connection station,

an alternative route searching unit that searches for a second route through which the passenger transfers to a vehicle, which is different from a vehicle to which the passenger is assumed to transfer when using the first route at the station where connection is not able to be secured, and heads for the destination station, based on route network information representing connection between stations and the predicted timetable information, and

an evaluation unit that determines whether it is necessary to change the departure time of the connection destination vehicle at the connection station, based on the transfer failure location information and a searching result of the alternative route searching unit,

the operation management system manages an operation plan of a transportation facility that operates in accordance with the operation plan and an operation state of the vehicle, and transmits the operation plan information and the vehicle position information to the timetable change support system, and

the ticketing system is a system for a passenger using the transportation facility to pay a fare for using the transportation facility, and transmits the movement demand prediction information to the timetable change support system.

10. The transportation system according to claim 9, wherein the operation management system transmits the latest vehicle position information to the timetable change support system at predetermined time intervals, and

the processing unit of the timetable change support system updates the vehicle position information stored in the storage unit, based on the latest vehicle position information.

11. The transportation system according to claim 9, wherein the ticketing system transmits the latest movement demand prediction information to the timetable change support system at predetermined time intervals, and

the processing unit of the timetable change support system updates the movement demand prediction information stored in the storage unit, based on the latest movement demand prediction information.

12. The transportation system according to claim 9, wherein the timetable change support system further includes a transmission unit that transmits information for uniquely identifying the connection destination vehicle, information for uniquely identifying the connection station, and departure time proposal information including recommended departure time of the connection destination vehicle to the operation management system when the evaluation unit determines that it is necessary to change the departure time.

13. The transportation system according to claim 12, wherein the timetable change support system further includes a reception unit that acquires identification information including information for uniquely identifying the transfer failure location and information for identifying whether the timetable change has been performed from the operation management system that has received the departure time change proposal information.

14. The transportation system according to claim 9, wherein the timetable change support system further includes a transmission unit that transmits alternative route information including information for uniquely identifying passengers for whom the alternative route searching unit determines that there is the second route and the second route searched for by the alternative route searching unit to the ticketing system when the evaluation unit determines that it is not necessary to change the departure time.

15. A timetable change support method for determining whether it is necessary to change departure time of a vehicle, the method comprising:

storing operation plan information, vehicle position information, and movement demand prediction information including a departure station of a passenger using each station where the vehicle stops, arrival time at the departure station, a destination station, and a first route from the departure station to the destination station;

estimating predicted arrival time of each vehicle at each station based on the vehicle position information and generating predicted timetable information;

estimating a transfer failure location defined by a station where connection is not able to be secured due to a delay of arrival of the vehicle, a connection source vehicle, and a connection destination vehicle, based on the predicted timetable information and transfer information including two vehicles between which the passenger is assumed to transfer and a connection station;

searching for a second route through which the passenger transfers to a vehicle, which is different from a vehicle to which the passenger is assumed to transfer when using the first route at the station where connection is not able to be secured, and heads for the destination station, based on route network information representing connection between stations and the predicted timetable information; and

determining whether it is necessary to change the departure time of the connection destination vehicle at the connection station, based on the transfer failure location information and a searching result of the alternative route searching unit.

[FIG. 1]

1

VEHICLE 1

A STATION

E STATION

ROUTE R1 : ·············
ROUTE R2 : ————
ROUTE R3 : – – – –

VEHICLE 4

VEHICLE 2

D
STATION

VEHICLE 3

B STATION

F STATION

H STATION

C STATION

G STATION

[FIG. 2]

10

100

200

201

TIMETABLE
CHANGE SUPPORT
SYSTEM

TICKETING
SYSTEM

300

400

500

OPERATION
MANAGEMENT
SYSTEM

OPERATION
MANAGEMENT
SYSTEM

OPERATION
MANAGEMENT
SYSTEM

[FIG. 3]

100

### TIMETABLE CHANGE SUPPORT SYSTEM

101

| INPUT UNIT |
|---|

102

| OUTPUT UNIT |
|---|

103

| COMMUNICATION UNIT |
|---|

B

| STORAGE UNIT |
|---|

104

| PROCESSING UNIT |
|---|

105

[FIG. 4]

TIMETABLE CHANGE SUPPORT SYSTEM — 100

TIMETABLE CHANGE NECESSITY DETERMINATION UNIT — 110

- OPERATION STATE PREDICTION UNIT — 120
- TRANSFER FAILURE LOCATION ESTIMATION UNIT — 130
- EVALUATION UNIT — 140
- ALTERNATIVE ROUTE SEARCHING UNIT — 150

STORAGE UNIT — 104

- OPERATION PLAN INFORMATION — D01
- VEHICLE POSITION INFORMATION — D02
- PREDICTED TIMETABLE INFORMATION — D03
- TRANSFER INFORMATION — D04
- TRANSFER FAILURE LOCATION INFORMATION — D05
- MOVEMENT DEMAND PREDICTION INFORMATION — D06
- ROUTE NETWORK INFORMATION — D07

[FIG. 5]

D3

| PREDICTED TIMETABLE INFORMATION | | | | | | | |
|---|---|---|---|---|---|---|---|
| VEHICLE ID | ROUTE ID | STATION NAME | ARRIVAL TIME | DEPARTURE TIME | PREDICTED ARRIVAL TIME | PREDICTED DEPARTURE TIME | DELAY |
| VEHICLE 1 | ROUTE R1 | A STATION | 7:19 | 7:20 | 7:25 | 7:26 | 6 MINUTES |
| VEHICLE 1 | ROUTE R1 | D STATION | 7:29 | 7:30 | 7:35 | 7:36 | 6 MINUTES |
| ... | ... | ... | ... | ... | ... | ... | ... |
| VEHICLE 2 | ROUTE R2 | B STATION | 7:24 | 7:25 | 7:24 | 7:35 | 0 MINUTES |
| VEHICLE 2 | ROUTE R2 | D STATION | 7:34 | 7:35 | 7:34 | 7:35 | 0 MINUTES |
| VEHICLE 2 | ROUTE R2 | F STATION | 7:44 | 7:45 | 7:44 | 7:45 | 0 MINUTES |
| VEHICLE 2 | ROUTE R2 | H STATION | 7:54 | 7:55 | 7:54 | 7:55 | 0 MINUTES |
| ... | ... | ... | ... | ... | ... | ... | ... |
| VEHICLE 3 | ROUTE R3 | C STATION | 7:34 | 7:35 | 7:34 | 7:35 | 0 MINUTES |
| VEHICLE 3 | ROUTE R3 | D STATION | 7:44 | 7:45 | 7:44 | 7:45 | 0 MINUTES |
| VEHICLE 3 | ROUTE R3 | G STATION | 7:54 | 7:55 | 7:54 | 7:55 | 0 MINUTES |
| VEHICLE 3 | ROUTE R3 | H STATION | 8:04 | 8:05 | 8:04 | 8:05 | 0 MINUTES |
| ... | ... | ... | ... | ... | ... | ... | ... |
| VEHICLE 4 | ROUTE R2 | B STATION | 7:44 | 7:45 | 7:44 | 7:45 | 0 MINUTES |
| VEHICLE 4 | ROUTE R2 | D STATION | 7:54 | 7:55 | 7:54 | 7:55 | 0 MINUTES |
| VEHICLE 4 | ROUTE R2 | F STATION | 8:04 | 8:05 | 8:04 | 8:05 | 0 MINUTES |
| VEHICLE 4 | ROUTE R2 | H STATION | 8:14 | 8:15 | 8:14 | 8:15 | 0 MINUTES |
| ... | ... | ... | ... | ... | ... | ... | ... |

[FIG. 6]

D4

| TRANSFER INFORMATION | | | | | |
|---|---|---|---|---|---|
| CONNECTION SOURCE VEHICLE ID | CONNECTION DESTINATION VEHICLE ID | STATION NAME | CONNECTION SOURCE VEHICLE ARRIVAL TIME | CONNECTION DESTINATION VEHICLE DEPARTURE TIME | TRANSFER REQUIRED TIME |
| VEHICLE 1 | VEHICLE 2 | D STATION | 7:29 | 7:35 | 3 MINUTES |
| VEHICLE 1 | VEHICLE 3 | D STATION | 7:29 | 7:45 | 2 MINUTES |
| ... | ... | ... | ... | ... | ... |

[FIG. 7]

D5

| TRANSFER FAILURE LOCATION INFORMATION | | | | | | | |
|---|---|---|---|---|---|---|---|
| TRANSFER FAILURE LOCATION ID | CONNECTION SOURCE VEHICLE ID | CONNECTION DESTINATION VEHICLE ID | STATION NAME | CONNECTION SOURCE VEHICLE PREDICTED ARRIVAL TIME | CONNECTION DESTINATION VEHICLE PREDICTED DEPARTURE TIME | TRANSFER REQUIRED TIME | DEFICIT TIME |
| 1 | VEHICLE 1 | VEHICLE 2 | D STATION | 7:35 | 7:35 | 3 MINUTES | 3 MINUTES |
| ... | ... | ... | ... | ... | ... | ... | ... |

[FIG. 8]

D6

| MOVEMENT DEMAND PREDICTION INFORMATION | | | | |
|---|---|---|---|---|
| PASSENGER ID | DEPARTURE STATION | DESTINATION STATION | PREDICTED DEPARTURE TIME | ESTIMATED COURSE |
| PASSENGER 1 | A STATION | F STATION | 7:20 | ROUTE R1: A STATION → D STATION, ROUTE R2: D STATION → F STATION |
| PASSENGER 2 | A STATION | H STATION | 7:20 | ROUTE R1: A STATION → D STATION, ROUTE R2: D STATION → H STATION |
| ... | ... | ... | ... | ... |

[FIG. 9]

D7

| DEPARTURE TIME CHANGE PROPOSAL INFORMATION | | | | |
|---|---|---|---|---|
| TRANSFER FAILURE LOCATION ID | DEPARTURE TIME CHANGE TARGET VEHICLE ID | DEPARTURE TIME CHANGE TARGET STATION | PREDICTED DEPARTURE TIME | RECOMMENDED DEPARTURE TIME |
| 1 | VEHICLE 2 | D STATION | 7:35 | 7:38 |
| ... | ... | ... | ... | ... |

20

[FIG. 10]

```
      ┌─────────────────────────────────────┐
      │   START TIMETABLE CHANGE NECESSITY   │
      │      DETERMINATION PROCESSING        │
      └─────────────────────────────────────┘
                        │
                        ▼
      ┌─────────────────────────────────────┐  S101
      │      ACQUIRE VEHICLE TRAVELING       │
      │         POSITION INFORMATION         │
      └─────────────────────────────────────┘
                        │
                        ▼
      ┌─────────────────────────────────────┐  S102
      │     ESTIMATE TRANSFER FAILURE LOCATION │
      └─────────────────────────────────────┘
                        │
                        ▼
           ◇─────────────────────────◇  S103          No
           │    IS THERE TRANSFER     │───────────────────┐
           │    FAILURE LOCATION?     │                   │
           ◇─────────────────────────◇                   │
                   Yes │                                  │
                       ▼                                  │
      ┌─────────────────────────────────────┐  S104       │
      │       ACQUIRE MOVEMENT DEMAND        │             │
      │        PREDICTION INFORMATION        │             │
      └─────────────────────────────────────┘             │
                        │                                  │
                        ▼                                  │
      ┌─────────────────────────────────────┐  S105a      │
      │    FOR EACH TRANSFER FAILURE LOCATION │            │
      └─────────────────────────────────────┘             │
                        │                                  │
                        ▼                                  │
      ┌─────────────────────────────────────┐  S106       │
      ││         EVALUATION VALUE          ││             │
      ││       CALCULATION PROCESSING      ││             │
      └─────────────────────────────────────┘             │
                        │                                  │
                        ▼                                  │
      ◇─────────────────────────────────────◇  S107  No   │
      │ DOES DEPARTURE TIME OF CONNECTION    │────────┐    │
      │ DESTINATION VEHICLE NEED TO BE CHANGED?│       │    │
      ◇─────────────────────────────────────◇        │    │
                 Yes │                                │    │
                     ▼                                │    │
      ┌─────────────────────────────────────┐  S108   │    │
      │     UPDATE DEPARTURE TIME CHANGE     │         │    │
      │         PROPOSAL INFORMATION         │         │    │
      └─────────────────────────────────────┘         │    │
                        │◄──────────────────────────────┘    │
                        ▼                                    │
      ┌─────────────────────────────────────┐  S105b         │
      │    FOR EACH TRANSFER FAILURE LOCATION │               │
      └─────────────────────────────────────┘                │
                        │                                     │
                        ▼                                     │
      ◇─────────────────────────────────────◇  S109   No     │
      │ IS THERE TRANSFER FAILURE LOCATION FOR│──────────────►│
      │ WHICH DEPARTURE TIME NEEDS TO BE CHANGED?│            │
      ◇─────────────────────────────────────◇               │
                 Yes │                                        │
                     ▼                                        │
      ┌─────────────────────────────────────┐  S110           │
      │    TRANSMIT DEPARTURE TIME CHANGE    │                 │
      │         PROPOSAL INFORMATION         │                 │
      └─────────────────────────────────────┘                 │
                        │                                      │
                        ▼                                      │
      ┌─────────────────────────────────────┐  S111           │
      │    DISPLAY DEPARTURE TIME CHANGE     │                 │
      │         PROPOSAL INFORMATION         │                 │
      └─────────────────────────────────────┘                 │
                        │◄─────────────────────────────────────┘
                        ▼
      ┌─────────────────────────────────────┐
      │  TERMINATE TIMETABLE CHANGE NECESSITY │
      │      DETERMINATION PROCESSING        │
      └─────────────────────────────────────┘
```

[FIG. 11]

[FIG. 12]

```
        ┌─────────────────────────────┐
        │   START EVALUATION VALUE    │
        │   CALCULATION PROCESSING    │
        └─────────────┬───────────────┘
                      ↓
   ┌──────────────────────────────────────┐  S201
   │ EXTRACT PASSENGER WHO TRANSFERS       │
   │ FROM CONNECTION SOURCE VEHICLE        │
   │ TO CONNECTION DESTINATION VEHICLE     │
   └──────────────────┬───────────────────┘
                      ↓                        S202a
   ┌──────────────────────────────────────┐
   │      FOR EACH TRANSFER PASSENGER      │
   └──────────────────┬───────────────────┘
                      ↓                        S203
   ┌──┬───────────────────────────────┬───┐
   │  │      ALTERNATIVE ROUTE         │   │
   │  │    SEARCHING PROCESSING        │   │
   └──┴───────────────┬───────────────┴───┘
                      ↓                   S204        Yes
        ╱─────────────────────────────╲──────────────────┐
        ╲   IS THERE ALTERNATIVE ROUTE? ╱                 │
         ╲─────────────┬───────────────╱                  │
                  No   ↓                       S205        │
   ┌──────────────────────────────────────┐               │
   │       UPDATE EVALUATION VALUE         │               │
   └──────────────────┬───────────────────┘               │
                      ↓←──────────────────────────────────┘
                      ↓                        S202b
   ┌──────────────────────────────────────┐
   │      FOR EACH TRANSFER PASSENGER      │
   └──────────────────┬───────────────────┘
                      ↓
        ┌─────────────────────────────┐
        │  TERMINATE EVALUATION VALUE  │
        │   CALCULATION PROCESSING     │
        └─────────────────────────────┘
```

[FIG. 13]

```
        ┌─────────────────────────────┐
        │   START ALTERNATIVE ROUTE   │
        │     SEARCHING PROCESSING    │
        └─────────────────────────────┘
                      │
                      ▼
        ┌─────────────────────────────┐  S301
        │  SEARCH FOR COURSE THROUGH  │
        │   WHICH TRANSFER TO         │
        │   DESTINATION STATION       │
        │ DIFFERENT FROM ORIGINAL     │
        │     ROUTE IS POSSIBLE       │
        └─────────────────────────────┘
                      │                              S302
                      ▼
        ╱─────────────────────────────╲                      No
       ╱    IS THERE COURSE DIFFERENT  ╲ ─────────────────────────┐
       ╲      FROM ORIGINAL ROUTE?     ╱                          │
        ╲─────────────────────────────╱                          │
                   Yes │                                          │
                      ▼                                           │
        ┌─────────────────────────────┐  S303                     │
        │   CALCULATE ARRIVAL TIME AT │                           │
        │   DESTINATION STATION WHEN  │                           │
        │     ORIGINAL ROUTE IS USED  │                           │
        └─────────────────────────────┘                          │
                      │                   S304a                    │
                      ▼                                           │
        ╱─────────────────────────────╲                          │
        │  FOR EACH DIFFERENT COURSE   │                          │
        ╲─────────────────────────────╱                          │
                      │                                           │
                      ▼                                           │
        ┌─────────────────────────────┐  S305                     │
        │  CALCULATE ARRIVAL TIME AT  │                           │
        │  DESTINATION STATION WHEN   │                           │
        │       COURSE IS USED        │                           │
        └─────────────────────────────┘                          │
                      │                                           │
                      ▼                                           │
        ┌─────────────────────────────┐  S306                     │
        │    CALCULATE DIFFERENCE     │                           │
        │     IN MOVEMENT TIME        │                           │
        └─────────────────────────────┘                          │
                      │                   S304b                    │
                      ▼                                           │
        ╱─────────────────────────────╲                          │
        │  FOR EACH DIFFERENT COURSE   │                          │
        ╲─────────────────────────────╱                          │
                      │                   S307                     │
                      ▼                                           │
        ╱─────────────────────────────╲              No          │
       ╱   IS THERE COURSE IN WHICH    ╲ ──────────────────┐      │
       ╲ DIFFERENCE IN ARRIVAL TIME IS ╱                   │      │
       ╲    WITHIN PREDETERMINED RANGE?╱                   │      │
        ╲─────────────────────────────╱                   │      │
                   Yes │  S308                             │ S309 │
                      ▼                                    ▼      ▼
        ┌─────────────────────────────┐      ┌─────────────────────────────┐
        │  DETERMINE THAT THERE IS    │      │  DETERMINE THAT THERE IS    │
        │     ALTERNATIVE ROUTE       │      │    NO ALTERNATIVE ROUTE     │
        └─────────────────────────────┘      └─────────────────────────────┘
                      │                                    │
                      ◄────────────────────────────────────┘
                      ▼
        ┌─────────────────────────────┐
        │  TERMINATE ALTERNATIVE ROUTE│
        │     SEARCHING PROCESSING    │
        └─────────────────────────────┘
```

[FIG. 14]

100

TIMETABLE CHANGE SUPPORT SYSTEM

110

TIMETABLE CHANGE NECESSITY
DETERMINATION UNIT

120

OPERATION STATE
PREDICTION UNIT

130

TRANSFER
FAILURE LOCATION
ESTIMATION UNIT

140

EVALUATION UNIT

150

ALTERNATIVE ROUTE
SEARCHING UNIT

160

PASSENGER POINT
UPDATING UNIT

104

STORAGE UNIT

D01

OPERATION PLAN
INFORMATION

D02

VEHICLE POSITION
INFORMATION

D03

PREDICTED TIMETABLE
INFORMATION

D04

TRANSFER INFORMATION

D05

TRANSFER FAILURE
LOCATION INFORMATION

D06

MOVEMENT DEMAND
PREDICTION INFORMATION

D07

ROUTE NETWORK
INFORMATION

D08

PASSENGER POINT
INFORMATION

[FIG. 15]

D8

| PASSENGER POINT INFORMATION | |
| --- | --- |
| PASSENGER ID | TOTAL POINT |
| PASSENGER 1 | 1 0 0 |
| PASSENGER 2 | 2 0 0 |
| ... | ... |

[FIG. 16]

```
         ┌──────────────────────────────────┐
         │  START TIMETABLE CHANGE NECESSITY │
         │     DETERMINATION PROCESSING      │
         └──────────────────────────────────┘
                         │
                         ▼
         ┌──────────────────────────────────┐  S101
         │     ACQUIRE VEHICLE TRAVELING     │
         │        POSITION INFORMATION       │
         └──────────────────────────────────┘
                         │
                         ▼
         ┌──────────────────────────────────┐  S102
         │   ESTIMATE TRANSFER FAILURE LOCATION │
         └──────────────────────────────────┘
                         │
                         ▼
              ╱────────────────────╲  S103
             ╱  IS THERE TRANSFER    ╲──────────────► No
             ╲  FAILURE LOCATION?    ╱
              ╲────────────────────╱
                    Yes │
                         ▼
         ┌──────────────────────────────────┐  S104
         │     ACQUIRE MOVEMENT DEMAND       │
         │       PREDICTION INFORMATION      │
         └──────────────────────────────────┘
                         │
                         ▼
         ╱──────────────────────────────────╲  S105a
        │    FOR EACH TRANSFER FAILURE LOCATION │
         ╲──────────────────────────────────╱
                         │
                         ▼
         ┌┤─────────────────────────────────┐  S106
         │        EVALUATION VALUE           │
         │      CALCULATION PROCESSING       │
         └┤─────────────────────────────────┘
                         │
                         ▼
              ╱────────────────────╲  S107
             ╱   DOES DEPARTURE TIME OF ╲
            ╱ CONNECTION DESTINATION VEHICLE ╲──────► No
             ╲   NEED TO BE CHANGED?   ╱
              ╲────────────────────╱
                    Yes │
                         ▼
         ┌──────────────────────────────────┐  S108
         │       UPDATE DEPARTURE TIME       │
         │    CHANGE PROPOSAL INFORMATION    │
         └──────────────────────────────────┘
                         │
                         ▼
         ╱──────────────────────────────────╲  S105b
        │    FOR EACH TRANSFER FAILURE LOCATION │
         ╲──────────────────────────────────╱
                         │
                         ▼
              ╱────────────────────╲  S109
             ╱  IS THERE TRANSFER FAILURE ╲
            ╱  LOCATION FOR WHICH DEPARTURE ╲──────► No
             ╲  TIME NEEDS TO BE CHANGED? ╱
              ╲────────────────────╱
                    Yes │
                         ▼
         ┌──────────────────────────────────┐  S110
         │      TRANSMIT DEPARTURE TIME      │
         │    CHANGE PROPOSAL INFORMATION    │
         └──────────────────────────────────┘
                         │
                         ▼
         ┌──────────────────────────────────┐  S111
         │       DISPLAY DEPARTURE TIME      │
         │    CHANGE PROPOSAL INFORMATION    │
         └──────────────────────────────────┘
                         │
                         ▼
         ┌┤─────────────────────────────────┐  S112
         │    PASSENGER POINT INFORMATION    │
         │        UPDATING PROCESSING        │
         └┤─────────────────────────────────┘
                         │
                         ▼
         ┌──────────────────────────────────┐
         │     TERMINATE TIMETABLE CHANGE    │
         │  NECESSITY DETERMINATION PROCESSING │
         └──────────────────────────────────┘
```

[FIG. 17]

```
        ┌─────────────────────────────────────┐
        │       START PASSENGER POINT         │
        │  INFORMATION UPDATING PROCESSING    │
        └─────────────────────────────────────┘
                        │
                        ▼
        ┌─────────────────────────────────────┐  S401
        │   RECEIVE INFORMATION REGARDING     │
        │        WHETHER DEPARTURE TIME       │
        │  CHANGE PROPORAL CAN BE ACCEPTED    │
        └─────────────────────────────────────┘
                        │                          S402a
                        ▼
        ┌─────────────────────────────────────┐
        │   FOR EACH TRANSFER FAILURE LOCATION │
        └─────────────────────────────────────┘
                        │                   S403
                        ▼
           ┌───────────────────────────┐              No
           │  CAN DEPARTURE TIME CHANGE │──────────────────────┐
           │   PROPORAL BE ACCEPTED?    │                      │
           └───────────────────────────┘                      │
                  Yes │        S404                            │ S405
                      ▼                                        ▼
        ┌─────────────────────────────────────┐   ┌─────────────────────────────────┐
        │  EXTRACT PASSENGER WHO HAS BOARDED  │   │    EXTRACT TRANSFER PASSENGER   │
        │   CONNECTION DESTINATION VEHICLE    │   │                                 │
        └─────────────────────────────────────┘   └─────────────────────────────────┘
                        │◄──────────────────────────────────────┘
                        ▼                          S406
        ┌─────────────────────────────────────┐
        │     PERFORM ADDITION TO TOTAL POINT │
        └─────────────────────────────────────┘
                        │                          S402b
                        ▼
        ┌─────────────────────────────────────┐
        │   FOR EACH TRANSFER FAILURE LOCATION │
        └─────────────────────────────────────┘
                        │
                        ▼
        ┌─────────────────────────────────────┐
        │      TERMINATE PASSENGER POINT       │
        │  INFORMATION UPDATING PROCESSING     │
        └─────────────────────────────────────┘
```

28

<table>
<tr><td colspan="2">INTERNATIONAL SEARCH REPORT</td><td>International application No.<br><br>**PCT/JP2022/007221**</td></tr>
</table>

**A. CLASSIFICATION OF SUBJECT MATTER**

*B61L 27/00*(2022.01)i; *G06Q 50/10*(2012.01)i; *G06Q 50/30*(2012.01)i
FI:  B61L27/00 H; G06Q50/10; G06Q50/30

According to International Patent Classification (IPC) or to both national classification and IPC

**B. FIELDS SEARCHED**

Minimum documentation searched (classification system followed by classification symbols)

B61L27/00; G06Q50/10; G06Q50/30

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2011-255766 A (TOSHIBA CORP.) 22 December 2011 (2011-12-22)<br>claim 1, paragraphs [0001]-[0008] | 1-15 |
| A | JP 2010-18221 A (RAILWAY TECHNICAL RES. INST.) 28 January 2010 (2010-01-28)<br>paragraphs [0001]-[0029] | 1-15 |
| A | JP 2008-62729 A (RAILWAY TECHNICAL RES. INST.) 21 March 2008 (2008-03-21)<br>paragraphs [0001]-[0028] | 1-15 |
| A | JP 2004-122900 A (MITSUBISHI ELECTRIC CORP.) 22 April 2004 (2004-04-22)<br>entire text, all drawings | 1-15 |
| A | JP 2019-73146 A (HITACHI, LTD.) 16 May 2019 (2019-05-16)<br>entire text, all drawings | 1-15 |
| A | JP 2020-32964 A (HITACHI, LTD.) 05 March 2020 (2020-03-05)<br>entire text, all drawings | 1-15 |

☐ Further documents are listed in the continuation of Box C.    ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |
| Date of the actual completion of the international search<br><br>**14 March 2022** | Date of mailing of the international search report<br><br>**29 March 2022** |
| Name and mailing address of the ISA/JP<br><br>**Japan Patent Office (ISA/JP)**<br>**3-4-3 Kasumigaseki, Chiyoda-ku, Tokyo 100-8915**<br>**Japan** | Authorized officer<br><br><br><br>Telephone No. |

Form PCT/ISA/210 (second sheet) (January 2015)

**INTERNATIONAL SEARCH REPORT**
Information on patent family members

International application No.

**PCT/JP2022/007221**

| Patent document cited in search report | | | Publication date (day/month/year) | Patent family member(s) | | | Publication date (day/month/year) |
|---|---|---|---|---|---|---|---|
| JP | 2011-255766 | A | 22 December 2011 | (Family: none) | | | |
| JP | 2010-18221 | A | 28 January 2010 | (Family: none) | | | |
| JP | 2008-62729 | A | 21 March 2008 | (Family: none) | | | |
| JP | 2004-122900 | A | 22 April 2004 | (Family: none) | | | |
| JP | 2019-73146 | A | 16 May 2019 | US 2020/0357091 A1 entire text, all drawings EP 3699060 A1 | | | |
| JP | 2020-32964 | A | 05 March 2020 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011255766 A